(19) Europäisches Patentamt / European Patent Office / Office européen des brevets

(11) **EP 1 298 592 B1**

(12) **FASCICULE DE BREVET EUROPEEN**

(45) Date de publication et mention
de la délivrance du brevet:
**16.04.2014 Bulletin 2014/16**

(51) Int Cl.:
**G06T 7/20** (2006.01)

(21) Numéro de dépôt: **02291921.1**

(22) Date de dépôt: **29.07.2002**

(54) **Stabilisation des images d'une scène, correction des offsets de niveaux de gris, détection d'objets mobiles et harmonisation de deux appareils de prise de vues fondés sur la stabilisation des images**

Stabilisierung von Bildern einer Szene, Korrigierung der Grauwertverschiebung, Erfassung bewegender Objekte und auf Bildstabilisierung basierter Abgleich von zwei Bildaufnahmevorrichtungen

Stabilizing images of a scene, gray level offset correction, moving object detection and adjustment of two image pickup devices based on image stabilization

(84) Etats contractants désignés:
**DE GB IT SE**

(30) Priorité: **31.07.2001 FR 0110243**
**19.02.2002 FR 0202081**

(43) Date de publication de la demande:
**02.04.2003 Bulletin 2003/14**

(73) Titulaire: **SAGEM Défense Sécurité**
**75015 Paris (FR)**

(72) Inventeur: **Broekaert, Michel**
**78620 L'Etang la Ville (FR)**

(74) Mandataire: **Bloch, Gérard et al**
**Gevers France**
**41, Avenue de Friedland**
**75008 Paris (FR)**

(56) Documents cités:
**EP-A- 0 986 252 US-A- 5 502 482**

- **CHAUDHURY K ET AL: "A TRAJECTORY-BASED COMPUTATIONAL MODEL FOR OPTICAL FLOW ESTIMATION" IEEE TRANSACTIONS ON ROBOTICS AND AUTOMATION, IEEE INC, NEW YORK, US, vol. 11, no. 5, 1 octobre 1995 (1995-10-01), pages 733-741, XP000539781 ISSN: 1042-296X**
- **YAO Y S ET AL: "Electronic image stabilization using multiple visual cues" PROCEEDINGS OF THE INTERNATIONAL CONFERENCE ON IMAGE PROCESSING. (ICIP). WASHINGTON, OCT. 23 - 26, 1995, LOS ALAMITOS, IEEE COMP. SOC. PRESS, US, vol. 3, 23 octobre 1995 (1995-10-23), pages 191-194, XP010196792 ISBN: 0-7803-3122-2**

**Description**

L'invention concerne la stabilisation électronique des images prises par un appareil d'observation d'un système d'imagerie, comme des jumelles thermiques portatives d'observation ou des caméras d'observation ou de guidage.

Le porteur de l'appareil, qu'il s'agisse d'un homme ou d'un engin, peut être animé d'un mouvement, d'une part, et crée de toutes façons des vibrations, d'autre part, et, à partir d'un certain grossissement, on ne voit plus rien sur les images qui sont trop floues. Il faut donc les stabiliser pour s'affranchir aussi bien des effets liés à la trajectoire du porteur que de ceux provoqués par les vibrations auxquels l'appareil est soumis, bref pour compenser les mouvements 3D de l'appareil.

Par stabilisation, on considérera, dans le cadre de la présente demande, qu'il s'agit de faire correspondre entre elles les images successives fournies par l'appareil d'observation. Plus précisément, l'image k+1 se distinguant de l'image k du fait de rotations de roulis, de tangage et de lacet, de changement de focale (dans le cas d'une caméra dont on peut faire varier le facteur de zoom), de translations et de vibrations angulaires et linéaires, il faut faire subir des rotations et des facteurs de zoom opposés pour stabiliser l'image k+1 sur l'image k.

Pour cela, on sait déjà déterminer ces rotations mais par des moyens gyroscopiques fondés sur un référentiel inertiel. Ce sont des moyens excessivement puissants. Comme il est illustré dans le document D1 (US 5 502 482). La demanderesse a cherché une solution beaucoup moins lourde et bon marché et c'est ainsi qu'elle propose son invention.

Ainsi, l'invention concerne un procédé de stabilisation électronique des images d'une scène d'un appareil de prise de vues d'un système d'imagerie dans lequel, dans un référentiel terrestre, on filtre les images de la scène prises par l'appareil dans un filtre passe-bas, pour n'en retenir que les basses fréquences spatiales, et on résoud l'équation du flot optique pour déterminer les rotations à faire subir aux images pour les stabiliser sur les images précédentes.

On soulignera d'abord que le référentiel du procédé de l'invention n'est plus un référentiel inertiel mais un référentiel terrestre.

Le filtrage passe-bas se fonde sur l'hypothèse suivante. Peu d'objets se déplacent par rapport à la scène et on peut donc se limiter à un procédé de compensation de mouvements par prédiction du mouvement de l'appareil, établissement d'un modèle linéaire décrivant les paramètres du mouvement de l'appareil (zoom, lacet, tangage, roulis et grandeur focale) et estimation de ces paramètres à l'aide de l'équation du flot optique, pour les basses, voire les très basses, fréquences des images qui correspondent à la scène. Aux basses fréquences, on ne retient que les gros objets de la scène, les petits objets ainsi que les transitions des contours étant effacés.

L'équation du flot optique mesure la totalité des déplacements de l'appareil.

On peut prétendre que le porteur et l'appareil de prise de vues ont la même trajectoire mais que l'appareil subit en plus des vibrations angulaires et linéaires qui peuvent être assimilées à des bruits à moyenne nulle, blancs ou non en fonction du spectre du porteur considéré.

Après avoir déterminé les déplacements dûs à la trajectoire de l'appareil, comme la totalité des déplacements est fournie par l'équation du flot optique, on en tire par différence les vibrations angulaires et linéaires aux fins de stabilisation.

De préférence, on négligera les vibrations linéaires compte-tenu de la distance d'observation et de leur faible amplitude par rapport aux déplacements du porteur.

De préférence encore, on procède à la résolution de l'équation du flot optique par la méthode des moindres carrés.

Avantageusement, les déplacements dus à la trajectoire de l'appareil, ou plus précisément la trajectoire du centre de gravité du porteur, sont déterminés par estimation, par exemple par moyennage ou filtrage dans un filtre de Kalman, du vecteur d'état de l'appareil de prise de vues.

L'invention concerne aussi un procédé de correction des offsets de niveaux de gris d'un appareil de prise de vues d'un système d'imagerie dont on stabilise les images selon le procédé de l'invention, caractérisé par le fait qu'on déduit le calcul des offsets des étapes du procédé de stabilisation.

L'invention sera mieux comprise à l'aide de la description suivante des principales étapes du procédé de stabilisation, en référence au dessin annexé, sur lequel

- la figure 1 illustre la géométrie du mouvement d'une caméra de prise de vues;
- la figure 2 est un schéma fonctionnel du système d'imagerie permettant la mise en oeuvre du procédé de stabilisation électronique d'images de l'invention;
- la figure 3 est une illustration de la propagation des corrections d'offset et
- la figure 4 est l'organigramme du procédé de stabilisation intégrant la mise en oeuvre de l'algorithme de correction des offsets.

Considérons une caméra d'observation et de guidage. Ce peut être une caméra vidéo ou une caméra infra-rouge.

Si la scène est stationnaire, les points de la scène vus par la caméra entre deux images sont reliés par la trajectoire du porteur.

Les coordonnées cartésiennes de la scène dans le repère du porteur sont P = (x, y, z)', l'origine est le centre de gravité du porteur, avec l'axe z orienté selon l'axe de roulis principal, l'axe x correspond à l'axe de lacet et l'axe y à l'axe de tangage.

La caméra est dans un système de coordonnées Cartésien ou Polaire à trois dimensions avec l'origine placée sur la lentille frontale de la caméra et l'axe z dirigé le long de la direction de visée.

La position de la caméra par rapport au centre de gravité du porteur est définie par trois rotations (ab, vc, gc) et trois translations (Txc, Tyc, Tzc). Le rapport entre les coordonnées 3D de la caméra et celles du porteur est :

$$(x', y', z')' = R(ac, bc, gc) \cdot (x, y, z)' + T(Txc, Tyc, Tzc)$$

où

- R est une matrice 3 x 3 de rotation,
- T est une matrice 1 x 3 de translation.

La trajectoire du centre de gravité est caractéristique de l'évolution de l'état du système et peut être décrite par le système d'équations différentielles

$$x(t) = F(t).x(t) + u(t) + v(t)$$

    x = vecteur d'état de dimension n
    F(t) = matrice fonction de t, de dimension n
    u = vecteur d'entrée fonction de t connu
    v = bruit blanc gaussien à n dimensions

L'état du système est lui même observé à l'aide de la caméra et la résolution de l'équation du flot optique, par m mesures z(t) liées à l'état x par l'équation d'observation :

$$z(t) = H(t).x(t) + w(t)$$

où H(t) est une matrice m x n fonction de t et w est un bruit blanc gaussien de dimension m, que l'on peut assimiler aux vibrations angulaires et linéaires de la caméra par rapport au centre de gravité du porteur.

Le modèle discret s'écrit :

$$\begin{vmatrix} x_{k+1} = F_k * x_k + u_k + v_k \\ z_k = H_k * x_k + w_k \end{vmatrix}$$

où

$x_k = [aP_k, aV_k, bP_k, bV_k, gP_k, gV_k, xP_k, xV_k, yP_k, yV_k, zP_k, zV_k]^T$ est le vecteur d'état à l'instant k de la trajectoire, composé des angles et vitesses lacet, tangage, roulis et positions et vitesses en x, y et z.

$x_{k-1}$ est le vecteur d'état à l'instant k+1 avec $t_{k+1} - t_k = T_i$.

$u_k$ est le vecteur d'entrée fonction de k connu; c'est le modèle de vol ou de trajectoire du centre de gravité du porteur.

$v_k$ est le bruit blanc gaussien à n dimensions représentant les bruits d'accélérations en lacet, tangage, roulis, positions x, y, z.

Si les angles et translations auxquels est soumise la caméra par rapport au centre de gravité ne sont pas constants au cours de la trajectoire, dans un viseur par exemple, il suffit de décrire leurs valeurs mesurées ou commandées (ac(t), bc(t), gc(t), Txc(t), Tyc(t), Tzc(t) en fonction de t ou de k.

Comme la trajectoire du centre de gravité du porteur est définie par le vecteur $x_{k+1}$, la trajectoire de la caméra peut être définie par un vecteur $xc_{k+1}$

$$xc_{k+1} = R(ac, bc, gc) * (F_k*x_k + u_k + v_k) + Tc$$

Entre les instants d'observation k et k+1, la caméra subit de pures rotations 3D et trois translations, dont les valeurs sont fournies par le vecteur $x'_{k+1}$.

Considérons la situation où les éléments de la scène sont projetés dans le plan image de la caméra et seules ces projections sont connues.

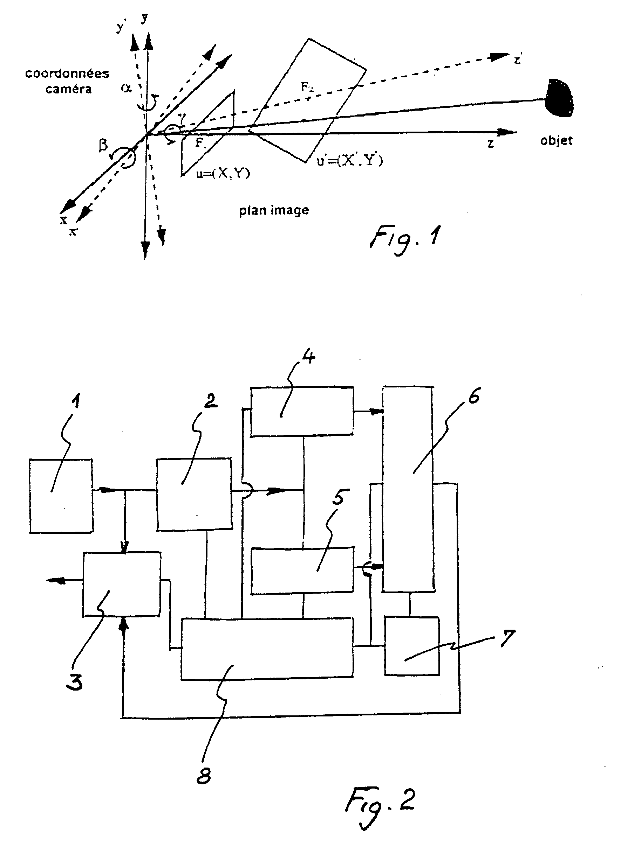

La figure 1 montre la géométrie du mouvement de la caméra dans l'espace 3D du monde réel.

La caméra est dans un système de coordonnées Cartésien ou Polaire à trois dimensions avec l'origine placée sur la lentille frontale de la caméra et l'axe z dirigé le long de la direction de visée.

Deux cas de complexités différentes existent :

- La scène est stationnaire tandis que la caméra zoome et tourne dans l'espace 3D.
- La scène est stationnaire tandis que la caméra zoome, tourne et se translate dans l'espace 3D.
  Soit P = (x, y, z)' = (d, a b)' les coordonnées cartésiennes ou polaires caméra d'un point stationnaire au temps t

  - x = d.sin(a).cos(b)
  - y = d.sin(b).cos(a)
  - z = d.cos(a).cos(b)

et P' = (x',y',z')' = (d', a', b')' les coordonnées caméra correspondantes au temps t' = t + Ti.

Les coordonnées caméra (x, y, z) = (d, a, b) d'un point dans l'espace et les coordonnées dans le plan image (X, Y) de son image sont liées par une transformation de perspective égale à :

$$X = F1(X,Y).x/z = F1(X,Y).tg(a)$$

$$Y = F1(X,Y).y/z = F1(X,Y)/tg(b)$$

où F1(X, Y) est la longueur focale de la caméra au temps t.

$$(x', y', z')' = R(da,db,dg)*(x,y,z)' + T(Tx, Ty, Tz)$$

où

- $R=R_\gamma R_\beta R_\alpha$ est une matrice 3 x 3 de rotation et alpha = da, bêta = db, gamma = dg sont, respectivement, l'angle de lacet, l'angle de tangage et l'angle de roulis de la caméra entre le temps t et t'
- T est une matrice 1 x 3 de translation avec Tx = x' - x, Ty = y' - y et Tz = z - z', les translations de la caméra entre le temps t et t'.

Les observations par la caméra se faisant à la fréquence trame (Ti = 20 ms) on peut noter que ces angles évoluent peu entre deux trames et qu'on pourra simplifier certains calculs en conséquence.

Quand la longueur focale de la caméra au temps t évolue, on a :

$$F2(X,Y) = s.F1(X, Y)$$

où s est appelé paramètre de zoom, les coordonnées (X', Y') du plan image peuvent être exprimées par

- X' = F2(X, Y).x'/z' = F2(X, Y). tg(a')
- Y' = F2(X, Y). y'/z' = F2(X, Y).tg(b')

Si on veut distinguer plus finement les mouvements de la caméra déduits de ceux du porteur et les mouvements réels de la caméra, on dira que le porteur et la caméra ont la même trajectoire, mais que la caméra subit en plus des vibrations linéaires et angulaires.

$$(x', \ y', \ z')' \ = \ R(da+aw,db+bw,dg+gw) \ * \ (x, \ y, \ z)' \ + \ T(Tx+xw,Ty+yw,Tz+zw)$$

où

aw, bw, gw, xw, yw, zw sont les vibrations angulaires.

Ces vibrations linéaires et angulaires peuvent être assimilées à des bruits à moyennes nulles, blanc ou non en fonction du spectre du porteur considéré

L'équation du flot optique s'écrit :

$$\text{image}_{k+1}(X, Y) = \text{image}_k(X, Y) + \frac{\partial(\text{image}_k(X, Y))}{\partial X}.dX_{k+1}(X, Y) + \frac{\partial(\text{image}_k(X, Y))}{\partial Y}.dY_{k+1}(X, Y)$$

ou : imagek+1(Ai, Aj)=imagek(Ai, Aj)+ GradientX(Ai, Aj),dAi .pasH - GradientY(Ai, Aj). dAj pasH avec GradientX et GradientY les dérivées selon X et Y de imagek(X,Y).

Pour estimer les gradients on se sert uniquement des points adjacents. Comme on ne cherche que le mouvement global de l'image du paysage, on ne va s'intéresser qu'aux très basses fréquences spatiales de l'image et donc filtrer l'image en conséquence. Ainsi, les gradients calculés sont significatifs.

Le filtrage passe-bas consiste, de façon classique, à faire glisser un noyau de convolution de pixel en pixel des images numérisées de la caméra, noyau sur lequel on remplace l'origine du noyau par la moyenne des niveaux de gris des pixels du noyau. Les résultats obtenus avec un noyau rectangulaire de 7 pixels de hauteur (v) et 20 pixels de large (H) sont très satisfaisants sur des scènes normalement contrastées. Par contre, si on veut que l'algorithme fonctionne aussi sur quelques points chauds isolés, il vaut mieux utiliser un noyau qui préserve les maxima locaux et ne crée pas de discontinuité dans les gradients. On peut également utiliser des fonctions ondelettes comme noyau de moyennage.

On a donc utilisé un noyau de moyennage en forme de pyramide (triangle selon X convolué par triange selon Y). La complexité du filtre n'est pas augmentée car on a utilisé deux fois un noyau rectangulaire de moyenne glissante de [V = 4; H = 10]. On peut également utiliser des fonctions ondelettes comme noyau de moyennage.

Seuls dX et dY sont inconnus, mais si on peut décomposer dX et dY en fonction des paramètres du vecteur d'état qui nous intéressent et de X et Y (ou Ai, Aj) de façon à n'avoir plus comme inconnues que les paramètres du vecteur d'état, on va pouvoir écrire l'équation sous une forme vectorielle B = A*Xtrans, avec A et B connus.

Chaque point de l'image pouvant être l'objet de l'équation, on est en présence d'un système surdéterminé, A*Xtrans = B, que l'on va pouvoir résoudre par la méthode des moindres carrés.

L'équation du flot optique mesure la totalité des déplacements de la caméra. On a vu plus haut qu'on pouvait distinguer plus finement les mouvements de la caméra déduits de ceux du porteur et les mouvements réels de la caméra en disant que le porteur et la caméra ont la même trajectoire, mais que la caméra subit en plus des vibrations linéaires et angulaires.

$$(x', y', z')' = R(da+aw, db+bw, dg+gw) \cdot (x, y, z)' + T(Tx+xw, Ty+yw, Tz+zw)$$

où

aw, bw, gw, xw, yw, zw sont les vibrations angulaires et linéaires

Or les déplacements dus à la trajectoire de la caméra (da, db, dg, Tx, Ty, Tz) sont contenus dans le vecteur d'état $X'_{k+1}$ de la caméra, ou plutôt dans l'estimation que l'on peut en faire, en moyennant, ou en ayant un filtre de Kalman qui en fournit la meilleure estimée.

Comme l'équation du flot optique mesure la totalité des déplacements, on va pouvoir en déduire les vibrations angulaires et linéaires aw, bw, gw, xw, zw, à des fins de stabilisation.

Il faut noter que sauf configurations extrêmement particulières, les vibrations linéaires ne pourront jamais être vues compte tenu de la distance d'observation, ou de leurs faibles amplitudes par rapport aux déplacements du porteur. On va donc observer : da + aw, db + bw, dg + gw, Tx, Ty, Tz.

Reprenons l'équation du flot optique :

$$\text{image}_{k+1}(X, Y) = \text{image}_k(X, Y) + \frac{\partial(\text{image}_k(X, Y))}{\partial X} . dX_{k+1}(X, Y) + \frac{\partial(\text{image}_k(X, Y))}{\partial Y} . dY_{k+1}(X, Y)$$

ou :

$$\boxed{\text{image}_{k+1}(X + dX_{k+1}(X, Y), Y + dY_{k+1}(X, Y)) = \text{image}_k(X, Y)}$$

Si on réalise cette opération, on voit que l'on va stabiliser de manière absolue les images de la séquence. Contrairement à une stabilisation inertielle où la ligne de visée est entachée de biais, de dérives et d'erreurs de facteur d'échelle, on peut créer une représentation de la scène non entachée de biais et de dérives si on la stabilise selon trois axes et si les défauts de distorsion de l'optique ont été compensés. Le quatrième axe (zoom) n'est pas forcément nécessaire mais il peut s'avérer indispensable en cas de zoom optique mais aussi dans le cas où la focale n'est pas connue avec assez de précision ou quand la focale varie avec la température (optiques IR, Germanium, etc...) ou la pression (indice de l'air).

Cela peut intéresser des applications où l'on veut faire de l'accumulation de trames sans traînage, ou si l'on veut garder une référence en absolu du paysage (l'harmonisation dynamique d'un auto-directeur et d'un viseur par exemple).

Mais cela peut aussi concerner des applications où on va chercher à restaurer l'information de paysage de manière optimale en obtenant une image débarrassée des effets d'échantillonnage et de taille de détecteur.

On peut obtenir simultanément une amélioration de la résolution spatiale et une réduction des bruits temporels ou du bruit spatial fixe.

On peut remarquer que la même équation peut aussi s'écrire :

$$\text{image}_{k+1}(X, Y) = \text{image}(X - dX_{k+1}(X, Y), Y - dY_{k+1}(X, Y))$$

Les valeurs $dX_{k+1}(X,Y)$, $dY_{k+1}(X, Y)$ ne sont bien évidemment pas connues à l'instant k. Par contre, en utilisant les équations de mouvement de caméra on peut les estimer à l'instant k+1.

Cela procure une meilleure robustesse dans la mesure des vitesses et cela autorise de grandes dynamiques de mouvements.

Comme le même point P du paysage, de coordonnées $X_k$, $Y_k$ dans l'image k, va se trouver aux coordonnées $X_{k+1}$ $Y_{k-1}$ dans l'image k+1 à cause des trois rotations $aV_{k+1}$. Ti, $bV_{k+1}$. Ti., $gV_{k+1}$.Ti, et du changement de focale, il faut donc faire subir des rotations et des facteurs de zoom opposés pour stabiliser de façon absolue l'image k+1 sur l'image k.

Examinon maintenant le cas particulier d'une scène stationnaire et pas de translation caméra.

Quand la caméra subit de pures rotations 3D, le rapport entre les coordonnées cartésiennes 3D caméra avant et après le mouvement de caméra est :

$$(x', y', z')' = R*(x, y, z)'$$

où R est une matrice 3 x 3 de rotation et alpha = da, bêta = db, gamma = dg sont, respectivement, l'angle de lacet, l'angle de tangage et l'angle de roulis de la caméra entre le tramps t et t'.

En coordonnées polaires 3D caméra, le rapport avant et après le mouvement de caméra est :

$$(d', a', b')' = K(da, db, dg) *(d, a, b)'$$

La scène étant stationnaire, on a :

$$d' = d \text{ pour tous les points du paysage}$$

$$X = F1(S, Y).x/z = F1(X, Y). \, tg(a)$$

$$Y = F1(X, Y). \, y/z \, ) \, F1(X, Y).tg(b)$$

Quand la longueur focale de la caméra au temps t évolue, on a :

$$F2(X,Y)= s \, . \, F1(X,Y)$$

où s est appelé paramètre de zoom, les coordonnées (X', Y') du plan image peuvent être exprimées par

- X' = F2(X, Y) . x'/z' = F2(X, Y) . tg(a')
- Y' = F2(X, Y) . y'/z' = F2(X, Y) . tg(b')

On a donc quatre paramètres qui peuvent varier.
Considérons le cas pratique, pour résoudre l'équation de flux optique, de l'estimation des vitesses de lacet, tangage et roulis et du changement de focale.
Si on pose :

B(:,:,1) = imagek+1(Ai, Aj)-imagek(Ai, Aj)

A(:,:,1) = DeriveeY(Ai, Aj),(1+(Aj,pasV/F1(X,Y))^2)

A(:,:,2) = DeriveeX (Ai, Aj),(1+(Ai.pasH/F1(X,Y))^2)

A(:,;,3) = DeriveeY(Ai, Aj),Ai, pasH /pasV - DeriveeX(Ai, Aj), .Aj .pasV /pasH

A(:,:,4) = DeriveeX(Ai, Aj), Ai + DeriveeY(Ai, Aj), Aj

Xtrans(1) = F1(0,0), bVk+1.Ti/pasV

Xtrans(2) = F1(0,0).. aVk+1.Ti/pasH

Xtrans(3) = gVk+1.Ti

Xtrans(4) = (s-1).Ti

on va chercher à résoudre l'équation :

$$A * Xtrans - B = 0$$

On utilise la méthode des moindres carrés pour minimiser la norme.

On peut écrire l'équation pour tous les points de l'image. Mais pour améliorer la précision et limiter les calculs, on peut remarquer que dans l'équation $A * Xtrans = B$, le terme B est la différence de deux images successives et qu'on peut éliminer toutes les valeurs trop faibles ou proches du bruit.

Dans les essais réalisés, on a conservé tous les points compris entre +/-0.6Max(B) et +/-Max(B). Pour les séquences étudiées, le nombre de points évoluait de quelques dizaines à environ 1500.

En référence à la figure 2, on va maintenant décrire brièvement le système d'imagerie permettant la mise en oeuvre du procédé de stabilisation.

La caméra de prise de vues 1 délivre son signal vidéo d'images à un filtre passe-bas 2 ainsi qu'à un bloc de traitement 3 recevant sur une deuxième entrée les données de stabilisation et fournissant en sortie les images stabilisées. Sur sa deuxième entrée, le bloc 3 reçoit donc les vitesses de rotation à faire subir aux images prises par la caméra 1. La sortie du filtre 2 est reliée à deux mémoires tampons 4, 5 stockant respectivement les deux images filtrées de l'instant présent t et de l'instant passé t-1. Les deux mémoires tampons 4, 5 sont reliées à deux entrées d'un composant de calcul 6, qui est soit un ASIC soit un FPGA (field programmable gate array). Le composant de calcul 6 est relié à une mémoire de travail 7 et, en sortie, au bloc de traitement 3. Tous les composants électroniques du système sont controlés par un microcontrôleur de gestion 8.

L'invention est intéressante car elle permet de corriger les offsets des niveaux de gris, c'est-à-dire les décalages existant entre les niveaux de gris des différents pixels de la matrice des détecteurs de la caméra et celui d'un pixel de référence, sans avoir besoin de disposer la caméra devant un fond uniforme, tel un corps noir.

En réalité, pour procéder à ces corrections d'offset, on part donc généralement d'un pixel de référence et on déplace la matrice de détecteurs de la caméra de pixel en pixel, par colonne de la matrice, puis par ligne, devant un même point (élément) de la scène, ce qui revient à effectuer un microbalayage de la scène par la caméra.

Et bien, la stabilisation d'images fournit un moyen qui équivaut au microbalayage de correction d'offset.

Avant stabilisation, quand la caméra fixe une scène, la multiplicité des images apparaissant à l'écran, avec des positions décalées, revient à ce que ce soit la scène qui se déplace par rapport à la caméra. Un détecteur défectueux dans la matrice de détection de la caméra ne bougera pas à l'écran.

Après stabilisation, c'est l'inverse, comme si c'était la matrice de détection qui bougeait par rapport à la scène stationnaire : un seul pixel défectueux provoque une trace à l'écran sur lequel l'image, unique, ne bouge pas.

La stabilisation d'images proposée dans la présente demande simule donc le microbalayage nécessaire à la correction d'offset des niveaux de gris et l'équation de flot optique permet le calcul des offsets qu'on déduit donc des étapes du procédé de stabilisation.

Voici comment il est proposé de procéder, étant entendu que, pour des raisons pratiques, il est souhaitable de calculer ces offsets en un temps relativement court, de quelques secondes, d'une part, et qu'il faut utiliser un procédé de calcul à faible temps de convergence, d'autre part, si on veut pouvoir effectuer un entretien d'offset malgré les variations rapides de ces offsets provoquées par des variations de température du plan focal.

Deux algorithmes vont être présentés.

**1°) Algorithme par filtrage temporel**

Il s'agit d'un algorithme de calcul de différence d'images.

Soit $I_{-stab_{n-1}}$, l'image $I_{n-1}$ stabilisée sur l'image $I_n$.

Dans le cas d'un pixel défectueux de la matrice de détecteurs, le défaut $\Delta a$ de l'image $I_{-stab_{n-1}}$ est le même que celui de l'image In, mais décalé dans l'espace, puisque la scène est recalée sur la scène vue par $I_n$.

La différence $I_n - I_{-stab_{n-1}} = \Delta a_n - \Delta a_{-stab_{n-1}}$

De même, $I_{n+1} - I_{-stab_n} = \Delta a_{n+1} - \Delta a_{-stab_n}$

La valeur d'offset restant sensiblement constante ($\Delta a$), on obtient donc

$$I_{n+1} - I_{-stab_n} = -\Delta a_{-stab_n} + \Delta a$$

$$In - I\text{-stab}_{n-1} = \Delta a - \Delta a\text{-stab}_{n-1}$$

Si on effectue un filtrage de moyennage temporel sur les tableaux d'offsets obtenus par difference à chaque trame,

$$\frac{(I_n - I\text{-stab}_{n-1}) + (I_{n+1} - I\text{-stab}_n)}{2}$$

avec une consdtante de temps suffisamment élevée, il y a convergence vers $\Delta$ a si on considère que les mouvements sont à moyenne nulle.

Compte-tenu de la nature des mouvements, leur amplitude ne dépasse jamais quelques pixels. Le calcul d'offset par filtrage de moyennage temporel, offset qui est en fait un différentiel d'offset entre des pixels éloignés de l'amplitude du mouvement, ne permet en fait de ne procéder qu'à une correction locale. Seules les variations spatiales haute fréquence pourront donc être corrigées, pas les variations basse fréquence, comme les effets liés à l'optique (signal en $\cos^4\theta$) et l'effet Narcisse dans le cas de détecteurs refroidis.

C'est pourquoi on propose un deuxième algorithme

**2°) Algorithme par propagation des corrections d'offset**

Plutôt que de calculer une différence d'image simple pour en ressortir l'offset, le principe de ce second algorithme est, à partir de deux trames, de propager l'offset des pixels le long de ce que l'on peut appeler des chaînes.

Le principe du premier algorithme était de faire la différence entre la trame $I_n$ et la trame $I_{n-1}$ stabilisée sur la trame $I_n$. Autrement dit, l'offset au point (x, y) était rendu égal à l'offset au point (x-mx(x, y),y-my(x,y)), si (mx(x,y),my(x,y)) est le déplacement permettant de trouver le pixel antécédent à (x,y) par le mouvement. C'est en fait le mouvement du point (x-mx(x,y),y-mx(x,y)).

Le principe de base du second algorithme est le même, sauf que l'offset se propage tout le long de l'image.

Supposons que l'on calcule l'offset $Offset_n(x1,y1)$ du point (x1,y1) par rapport au point (x0,y0) = (x1-mx(x1,y0),y1-my(x1,y1)), qui a vu le même point de la scène, en calculant la différence :

$$Offsets_n(x1,y1) = I_n(x1,y1) - I_{n-1}(x1\text{-}mx(x1,y1), y\text{-}my(x1,y1)) \qquad (47)$$

Cette différence est égale à :

$$I_n(x1,y1) - I\text{-sta }_{n-1}(x1,y1)$$

Appliquons maintenant cet offset sur $I_{n-1}$ :

$$I_{n-1}(x1,y1) = I_{n-1}(x1,y1) - Offset(x1,y1) \qquad (48)$$

Nous avons enregistré $Offsets_n(x1,y1)$. Nous avons également corrigé l'offset du pixel physique (x1,y1) sur la trame $I_{n-1}$ que nous considérons, en prenant comme référence l'offset du pixel (x0,y0).

Maintenant, considérons le point (x2,y2) de l'image $I_n$, tel que (x2-mx(x2,y2),y2-my(x2,y2)) = (x1,y1). Ce pixel de $I_n$ a vu le même point du paysage que le pixel (x1,y1) de l'image $I_{n-1}$, que nous venons de corriger. On peut donc ré-itérer le processus et rendre l'offset du pixel physique (x2,y2) égal à celui du pixel (x1,y1), que nous avons lui-même au préalable rendu égal à celui du pixel (x0,y0).

Nous voyons que nous pouvons propager ainsi l'offset du pixel (x,y) tout le long d'une chaîne. Cette chaîne est constituée à la fin de la propagation de pixels qui ont tous le même offset, aux erreurs d'interpolation près, comme nous allons le voir par la suite. Il s'agit pour pouvoir créer cette chaîne de pixels corrigés de parcourir l'image dans un sens qui permet de toujours calculer la différence entre un pixel non-corrigé (xi,yi) de $I_n$ et un pixel déjà corrigé (x(i-1),y(i-1)) de $I_{n-1}$. On va appeler par la suite ce sens de parcours des chaînes imposé "condition de propagation des offsets".

L'offset commun à tous les pixels de la chaîne est l'offset de son premier pixel (x0,y0). Cependant, du fait de l'interpolation utilisée pour pouvoir calculer le différentiel d'offset, nous allons voir que les offsets des chaînes voisines vont se mélanger.

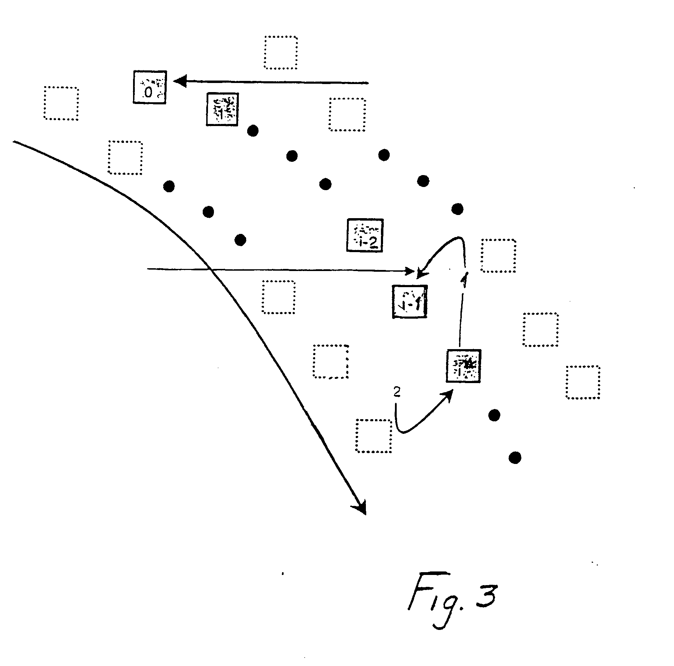

Le principe de la propagation des corrections d'offset est illustré par la figure 3.

Soit la chaîne j de pixels référencés 0,1,...i-2, i-1, i..... de l'image $I_n$.

Le pixel 0 est le premier pixel de la chaîne et n'a pas de correspondant dans l'image $I_{n-1}$. Pour corriger le pixel i, on calcule d'abord la différence entre le pixel i non corrigé de l'image $I_n$ et le pixel i-1 de l'image $I_{n-1}$, corrigé à l'itération i-1, puis on procède à la correction du pixel i sur l'image $I_{n-1}$.

Toutefois, et bien que le résultat d'une telle correction soit satisfaisant très rapidement, voire même dès la deuxième image, il reste encore des défauts, des effets de traînée, dûs notamment à l'hypothèse que les premières ligne et colonne de pixels sont supposées bonnes et que, entre deux images, il n'y a pas déplacement d'un nombre entier de pixels et qu'il faut donc interpoler. L'erreur d'interpolation est d'autant plus grande que les chaînes sont longues.

L'erreur de propagation va être en partie corrigée par un filtrage temporel des trames d'offsets de type moyennage temporel et une gestion temporelle de la longueur des chaînes de pixels.

A titre d'information, il sera donné ci-dessous les expressions récursives de filtres possibles :

filtre de moyenne infinie

$$\text{Off}\_\text{filt}_n = \frac{1}{n}\left(\sum_{k=n0}^{n}\text{Off}_k\right) = \frac{1}{n}\{(n-1)\text{Off}\_\text{filt}_{n-1} + \text{Off}_n\} \qquad (49)$$

filtre passe-bas du 1$^{er}$ ordre

$$\text{Off}\_\text{filt}_n = \frac{1}{\tau+1}\{(\tau-1)\text{Off}\_\text{filt}_{n-1} + \text{Off}_n + \text{Off}_{n-1}\}$$

Le premier filtre est plutôt adapté à une évaluation de l'offset, le second, à un entretien de l'offset, avec une constante de temps t de l'ordre de grandeur de la durée au bout de laquelle on considère que l'offset a varié.

Un filtrage du type infini permet d'allier une convergence relativement rapide vers l'offset considéré comme fixe à l'échelle de plusieurs minutes, à une bonne élimination du bruit. Cependant, si le bruit de mesure n'est pas à moyenne nulle, ce qui est le cas puisque le mouvement n'est pas exactement à moyenne nulle, et si la nature de la scène intervient dans l'erreur de mesure, alors le filtre converge assez rapidement au départ, mais, du fait de son très grand retard de phase va converger de plus en plus lentement, et par là même acquérir un certain biais. Afin d'accélérer la convergence de l'offset vers zéro, on effectue un certain nombre de rebouclages, ainsi qu'une gestion de la longueur des chaînes.

En ce qui concerne la longueur des chaînes, le compteur est ré-initialisé à zéro après une certaine longueur L, et une nouvelle chaîne commence avec comme référence le pixel courant. Ainsi, on change de référence plusieurs fois le long de l'image, et on ne corrige pas l'offset basse fréquence. Mais, comme la longueur de propagation L est réduite, on réduit par la même occasion les erreurs de propagation énoncées plus haut. Tout ceci fait qu'on est capable d'obtenir un algorithme de correction des offsets ajustable en fonction du besoin, sachant qu'un gain en rapidité de convergence temporelle se traduit par une perte dans la ccorrection des basses fréquences spatiales.

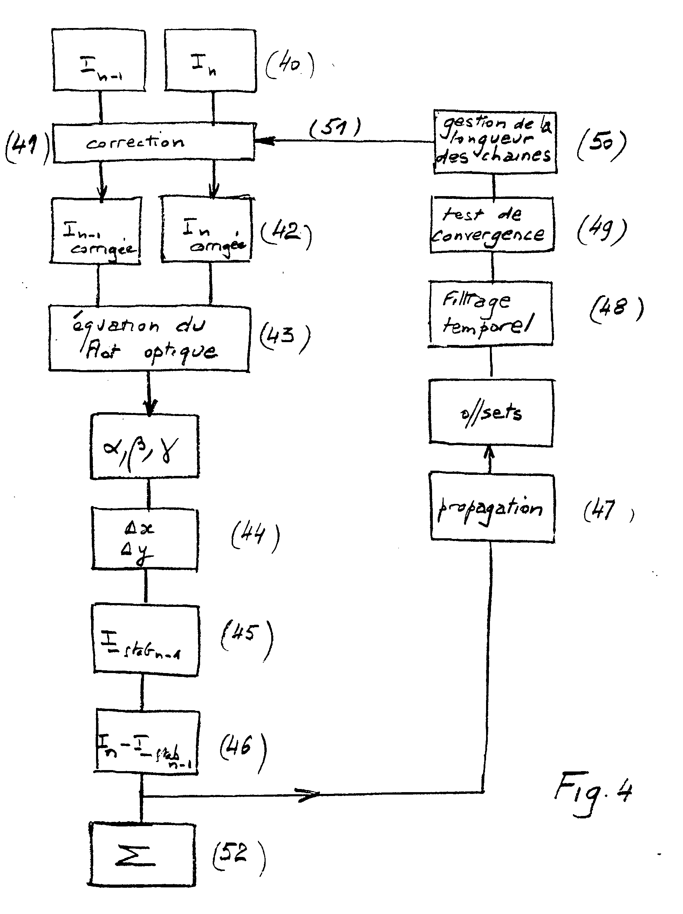

Finalement, l'algorithme de correction des offsets est illustré par l'organigramme de la figure 4, intégré à l'ensemble du procédé de stabilisation.

Les pixels des images $I_n$ et $I_{n-1}$ étant obtenus à l'étape 40, après correction 41, on obtient les images corrigées $I_{n-1}$ corrigée et $I_n$ corrigée à l'étape 42. La résolution, à l'étape 43, de l'équation du flot optique, fournit les angles de roulis $\alpha$, de tangage $\beta$ et de lacet $\gamma$ de la caméra en fonction aussi desquels, à l'étape 44, on détermine les translations $\Delta x$, $\Delta y$ à appliquer pour, à l'étape 45, stabiliser l'image $I_{n-1}$ sur l'image $I_n$ et, à l'étape 46, faire la différence entre les deux.

Après mise en oeuvre de l'algorithme par propagation des corrections d'offset à l'étape 47, on obtient les offsets.

En ce qui concerne l'évaluation des offsets, l'objectif est plutôt d'obtenir une correction de l'offset sur tout le spectre des fréquences spatiales. On utilise un filtre de moyenne infinie, retenu pour l'évaluation, et, sachant qu'il existe un biais dans la mesure du fait du retard de phase du filtre, on opère un rebouclage de l'offset après convergence, un certain nombre de fois. On réalise le rebouclage lorsque la somme des différences entre deux tableaux d'offsets filtrés consécutifs passe sous un certain seuil.

Mais ceci doit être couplé à une diminution de la longueur des chaînes (50), afin d'éliminer les erreurs de propagation, qui sont d'autant plus importantes que les chaînes sont longues.

Si on diminue la longueur des chaînes de pixels à chaque rebouclage, on va progressivement inhiber l'influence de l'offset sur les basses fréquences spatiales, mais celles-ci auront déjà été corrigées lors des premiers rebouclages.

Plus la longueur L des chaînes est courte, moins les erreurs de propagation vont être importantes, et par conséquent plus le filtre infini va converger rapidement.

En résumé, après stabilisation des images, on détermine les offsets par un algorithme (47) de calcul de différences d'images (46), de préférence, par un algorithme par propagation (47) des corrections d'offset.

Avantageusement, on procède (48) à un filtrage temporel des trames d'offsets, suivi d'un test de convergence (49) et d'une gestion (50) de la longueur des chaînes de pixels pour éliminer les erreurs de propagation.

De préférence encore, on procède (51) à des rebouclages des offsets.

Après stabilisation des images deux à deux (45), conduisant à une certaine netteté des objets mobiles, grâce au calcul par différence d'images (46), on peut par sommation (52) des différences (figure 4) éliminer des images tous les objets fixes et détecter ainsi les objets mobiles de la scène à l'aide de l'appareil de prise de vues du système d'imagerie dont on stabilise les images et dont on corrige les offsets selon les procédés de l'invention.

On vient de décrire un procédé de stabilisation des images d'un unique appareil de prise de vues d'un système d'imagerie, dans lequel on stabilise ces images sur les images précédentes.

En d'autres termes, le procédé décrit est un procédé d'auto-stabilisation, dans lequel on stabilise l'image de l'instant t sur l'image de l'instant t-1. En d'autres termes encore, on peut dire qu'on harmonise chaque image du système d'imagerie sur la précédente.

Et bien, la demanderesse a réalisé qu'il était possible d'extrapoler le procédé de stabilisation décrit ci-dessus à l'harmonisation de deux dispositifs optiques montés sur un même porteur, comme par exemple un dispositif de visée d'un poste de conduite de tir et le dispositif de prise de vues d'un système d'imagerie de moyens d'auto-guidage d'une roquette ou d'un missile, à bord d'un char ou d'un hélicoptère, par exemple encore. A cet effet, on procède exactement de la même manière.

Au même instant t, on prend les deux images des deux dispositifs et on les stabilise l'une sur l'autre, c'est-à-dire qu'on harmonise les deux dispositifs.

Harmoniser revient à procéder à la confusion des axes optiques des deux dispositifs ainsi qu'à mettre en concordance deux à deux les pixels des deux images et, de préférence, à procéder aussi à la confusion de ces pixels.

Naturellement, les deux dispositifs à harmoniser selon ce procédé doivent être de même nature optique, c'est-à-dire fonctionner dans des longueurs d'onde comparables.

Ainsi, l'invention concerne également un procédé d'harmonisation électronique de deux appareils de prise de vues de deux systèmes d'imagerie prenant tous les deux des images d'une même scène, dans lequel, dans un référentiel terrestre, on filtre les images de la scène prises aux mêmes instants par les deux appareils dans un filtre passe-bas, pour n'en retenir que les basses fréquences spatiales, et on résoud l'équation du flot optique entre ces paires d'images respectives des deux appareils, pour déterminer les rotations et la variation du rapport des paramètres de zoom respectifs à faire subir à ces images pour les harmonier les unes sur les autres.

## Revendications

1. Procédé de correction des offsets de niveaux de gris d'un appareil de prise de vues d'un système d'imagerie, dont on stabilise les images selon un procédé de stabilisation électronique des images d'une scène dudit appareil de prise de vues dans lequel, dans un référentiel terrestre, on filtre les images de la scène prises par l'appareil dans un filtre passe-bas, pour n'en retenir que les basses fréquences spatiales, et on résout l'équation du flot optique pour déterminer les rotations à faire subir aux images pour les stabiliser sur les images précédentes, ledit procédé de stabilisation simulant un microbalayage nécessaire à la correction des offsets de niveaux de gris, l'équation du flot optique permettant le calcul des offsets qu'on déduit des étapes du procédé de stabilisation.

2. Procédé selon la revendication 1, dans lequel après avoir déterminé les déplacements dûs à la trajectoire de l'appareil, on en tire par différence des vibrations angulaires et linéaires aux fins de stabilisation.

3. Procédé selon la revendication 2, dans lequel on néglige les vibrations linéaires.

4. Procédé selon l'une des revendications 1 à 3, dans lequel on procède à la résolution de l'équation du flot optique par la méthode des moindres carrés.

**5.** Procédé selon l'une des revendications 1 à 4, dans lequel les déplacements dûs à la trajectoire de l'appareil sont déterminés par estimation.

**6.** Procédé selon la revendication 5, dans lequel les déplacements dûs à la trajectoire de l'appareil sont déterminés par moyennage du vecteur d'état de l'appareil de prise de vues.

**7.** Procédé selon la revendication 5, dans lequel les déplacements dûs à la trajectoire de l'appareil sont déterminés par filtrage, dans un filtre de Kalman, du vecteur d'état de l'appareil de prise de vues.

**8.** Procédé selon l'une des revendications 1 à 7, dans lequel, après stabilisation des images, on détermine les offsets par un algorithme (47) de calcul de différences d'images (46).

**9.** Procédé selon la revendication 8, dans lequel on met en oeuvre un algorithme par propagation (47) des corrections d'offset.

**10.** Procédé selon l'une des revendications 8 et 9, dans lequel on procède (48) à un filtrage temporel des trames d'offsets.

**11.** Procédé selon la revendication 10, dans lequel, après filtrage des trames d'offsets (48), on procède à un test de convergence (49) et à une gestion (50) de la longueur des chaînes de pixels.

**12.** Procédé selon l'une des revendications 1 à 11, dans lequel on procède (51) à des rebouclages des offsets.

**13.** Procédé de détection d'objets mobiles dans une scène par prises de vues à l'aide d'un appareil d'un système d'imagerie, dont on stabilise les images de la scène et dont on corrige les offsets de niveau de gris selon le procédé de l'une des revendications 1 à 12, **caractérisé par le fait que**, après stabilisation des images deux à deux (45) et correction d'offsets par calcul de différence d'images (46), on somme (52) les différences pour éliminer des images les objets fixes de la scène.

## Patentansprüche

**1.** Verfahren zum Korrigieren von Graustufen-Offsets einer Bildaufnahmevorrichtung eines Bildgebungssystems, dessen Bilder gemäß einem elektronischen Stabilisierungsverfahren der Bilder einer Szene der Bildaufnahmevorrichtung stabilisiert werden, in dem in einem terrestrischen Bezugssystem die durch die Vorrichtung aufgenommenen Bilder der Szene in einem Tiefpassfilter gefiltert werden, um davon lediglich die tiefen Raumfrequenzen zu berücksichtigen, und die optische Flussgleichung aufgelöst wird, um die Drehungen zu bestimmten, denen die Bilder zu unterziehen sind, um sie auf den vorhergehenden Bildern zu stabilisieren, wobei das Stabilisierungsverfahren eine Mikroabtastung simuliert, die für die Korrektur der Graustufen-Offsets erforderlich ist, wobei die optische Flussgleichung die Berechnung der Offsets ermöglicht, die von den Schritten des Stabilisierungsverfahrens abgeleitet werden.

**2.** Verfahren nach Anspruch 1, wobei nach dem Bestimmen der Verschiebungen aufgrund des Weges der Vorrichtung durch die Differenz winklige und lineare Schwingungen zu Stabilisierungszwecken davon abgeleitet werden.

**3.** Verfahren nach Anspruch 2, wobei die linearen Schwingungen vernachlässigt werden.

**4.** Verfahren nach einem der Ansprüche 1 bis 3, wobei die Auflösung der optischen Flussgleichung durch die Methode der kleinsten Quadrate vorgenommen wird.

**5.** Verfahren nach einem der Ansprüche 1 bis 4, wobei die Verschiebungen aufgrund des Weges der Vorrichtung durch Schätzung bestimmt werden.

**6.** Verfahren nach Anspruch 5, wobei die Verschiebungen aufgrund des Weges der Vorrichtung durch Mitteln des Zustandsvektors der Bildaufnahmevorrichtung bestimmt werden.

**7.** Verfahren nach Anspruch 5, wobei die Verschiebungen aufgrund des Weges der Vorrichtung durch Filtern des Zustandsvektors der Bildaufnahmevorrichtung in einem Kalmanfilter bestimmt werden.

8. Verfahren nach einem der Ansprüche 1 bis 7, wobei nach der Stabilisierung der Bilder die Offsets durch einen Algorithmus (47) zur Berechnung von Bilddifferenzen (46) bestimmt werden.

9. Verfahren nach Anspruch 8, wobei ein Algorithmus durch Ausbreitung (47) der Offset-Korrekturen eingesetzt wird.

10. Verfahren nach einem der Ansprüche 8 und 9, wobei eine Zeitfilterung der Offset-Raster durchgeführt (48) wird.

11. Verfahren nach Anspruch 10, wobei nach dem Filtern der Offset-Raster (48) ein Konvergenztest (49) und eine Verwaltung (50) der Länge der Pixelketten durchgeführt werden.

12. Verfahren nach einem der Ansprüche 1 bis 11, wobei Rückführungen der Offsets durchgeführt (51) werden.

13. Verfahren zur Detektion beweglicher Objekte in einer Szene durch Bildaufnahmen mittels einer Vorrichtung eines Bildgebungssystems, von dem die Bilder der Szene stabilisiert werden und die Graustufen-Offsets nach dem Verfahren nach einem der Ansprüche 1 bis 12 korrigiert werden, **dadurch gekennzeichnet, dass** nach dem paarweisen Stabilisieren der Bilder (45) und dem Korrigieren von Offsets durch Berechnung von Bilddifferenzen (46) die Differenzen summiert (52) werden, um die festen Objekte der Szene von den Bildern zu entfernen.

**Claims**

1. Process for correcting offsets in grey levels of a snapshot capturing apparatus of an imaging system whose images are stabilised according to a process for the electronic stabilisation of the images of a scene of said snapshot capturing apparatus wherein, in a terrestrial reference frame, the images of the scene captured by the apparatus are filtered in a low-pass filter, so as to retain only the low spatial frequencies thereof, and the optical flow equation is solved to determine the rotations to be imposed on the images in order to stabilise them with regard to the previous images, said stabilisation process simulating a microscan necessary for correcting offsets in grey levels, the optical flow equation allowing the calculation of the offsets deduced from the steps of the stabilisation process.

2. Process according to claim 1, wherein after having determined the displacements due to the trajectory of the apparatus, angular and linear vibrations are derived therefrom by differencing for the purposes of stabilisation.

3. Process according to claim 2, wherein the linear vibrations are neglected.

4. Process according to any of claims 1 to 3, wherein the optical flow equation is solved by the method of least squares.

5. Process according to any of claims 1 to 4, wherein the displacements due to the trajectory of the apparatus are determined by estimation.

6. Process according to claim 5, wherein the displacements due to the trajectory of the apparatus are determined by averaging the state vector of the snapshot capturing apparatus.

7. Process according to claim 5, wherein the displacements due to the trajectory of the apparatus are determined by filtering, in a Kalman filter, the state vector of the snapshot capturing apparatus.

8. Process according to any of claims 1 to 7, wherein, after stabilising the images, the offsets are determined via an algorithm (47) for calculating image differences (46).

9. Process according to claim 8, wherein an offset correction propagation algorithm (47) is implemented.

10. Process according to either claim 8 or claim 9, wherein a temporal filtering of the offsets frames is carried out (48).

11. Process according to claim 10, wherein, after filtering the offsets frames (48), a convergence test (49) and management (50) of the length of the chains of pixels are carried out.

12. Process according to any of claims 1 to 11, wherein feedbacks of the offsets are carried out (51).

13. Process for detecting movable objects in a scene by capturing snapshots with the aid of an apparatus of an imaging system whose images of the scene are stabilised and whose grey level offsets are corrected according to the process of any of claims 1 to 12, **characterised in that**, after pairwise stabilisation of the images (45) and correction of offsets by image difference calculation (46), the differences are summed (52) so as to eliminate the fixed objects of the scene from the images.

Fig. 1

Fig. 2

Fig. 3

Fig. 4

**EP 1 298 592 B1**

## RÉFÉRENCES CITÉES DANS LA DESCRIPTION

### Documents brevets cités dans la description

- US 5502482 A